# EUROPEAN PATENT APPLICATION

(11) **EP 2 586 608 A1**
(43) Date of publication of application: **01.05.2013**
(21) Application number: 11186544.0
(22) Date of filing: 25.10.2011
(51) Int. Cl.: B32B 5/18, B65D 5/46, B65D 75/56

(54) **Handle device for product packages in general**

(71) Applicant: Grafiche Gelmini SRL, 20134 Milan (IT)
(72) Inventor: Gelmini, Diego, 20134 Milan (IT)
(74) Representative: Coloberti, Luigi

(57) **Abstract**

A handle device (1) for a product package in general comprises:
a foamed material layer (2),
a graphic support layer (3) printed with graphic elements (5) such as information data relevant to said product and/or decorative patterns or the like, said graphic support layer (3) being joined to said foamed material layer (2);
a light-permeable adhesive material layer (30) intended to be applied to said package,
the graphic support layer (3) being interposed between said foamed material layer (2) and said adhesive material layer (30).

## Description

The present invention relates to a handle device for product packages in general, particularly packages for food products and consumable items such as beverages, mineral water, etc...

Handle elements for lifting and carrying a plurality of bottles being contained and hold by means of a thermoplastic packaging material are known. A known handle element comprises a tape of adhesive plastic material intended to be joined to the package, coupled to a portion of paper or paperboard on which information related to the product can be indicated, such as barcodes, manufacturer's brand, or the like. The tape of adhesive plastic material has a structural function as it provides the handle element with the strength required to allow for the lifting of the packaging. A piece of adhesive tape and a corresponding portion of paper or paperboard are joined upon placing the handle onto the product, i.e. during the product packaging operations.

The handle element described above, due to the lack of softness, has the drawback of being very uncomfortable for a user because it often causes cuts and/or injuries to his/her fingers. In order to overcome this drawback, it is known to use another type of handle consisting of a strip of protective foam such as foamed polystyrene, also known as "foam", which is glued to a tape of adhesive plastic material to be joined to the product packaging. This type of handle has good softness characteristics, provides a greater comfort to the user and facilitates lifting and carrying the packaging. However, an inconvenience of the latter type of handle is that it is not capable of supporting decorative patterns, information data, or graphic elements in general terms with a sufficient quality and effectiveness. Particularly, since the foam layer is a low-density, dimensionally non-stable material, it is not suitable to receive a quality print; on the other hand, it is rather difficult, or even impossible, to print data or graphic elements on the tape of adhesive plastic material in a satisfactory manner.

What has been stated above, in addition to damage the visual appearance of the packaging, also makes it impossible to print on the packaging top those graphic elements or information which require high printing accuracy, for example barcodes, which require a suitable graphic resolution for working properly, and in order to avoid reading mistakes.

An object of the invention is to improve the known handle devices.

A further object is to provide a handle device which is comfortable to use by a user, which does not cause injuries to the latter, while being capable of supporting graphic elements in general thus allowing for printings of high quality and resolution.

In a first aspect of the invention, a handle device is provided as defined in claim 1.

In a second aspect of the invention a method is provided for obtaining a handle device as defined in claim 7.

Owing to the invention, the above-mentioned drawbacks are overcome. Further characteristics and advantages will be apparent from the dependent claims and the description below.

The invention will be better understood and carried out with reference to the annexed drawings, which illustrate an exemplary and non-limiting embodiment thereof, wherein:
Fig. 1 schematically shows a handle device according to the invention;

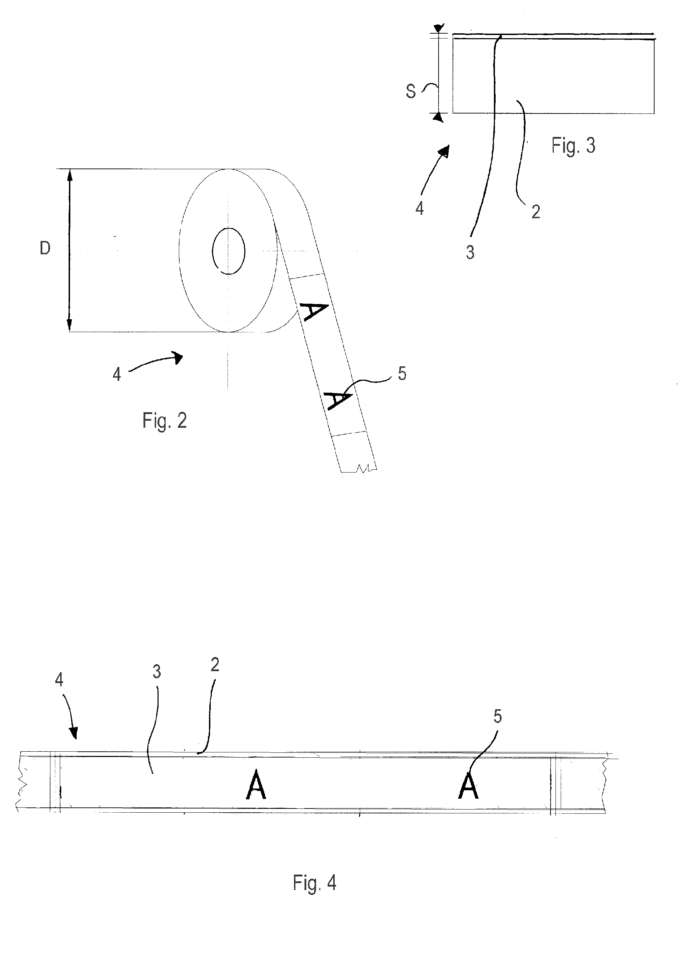

Fig. 2 schematically shows a roll of sheet material from which a plurality of handle devices according to the invention is obtained;
Fig. 3 is a view along the thickness of the sheet material of Fig. 2, in which the overlapping of a graphic support layer on a foam support layer can be seen;
Fig. 4 is a plan view of the sheet material of Fig. 2;
Fig. 5 schematically shows a possible method for obtaining the sheet material according to the invention;
Fig. 6 schematically shows a further possible method for obtaining the sheet material according to the invention;

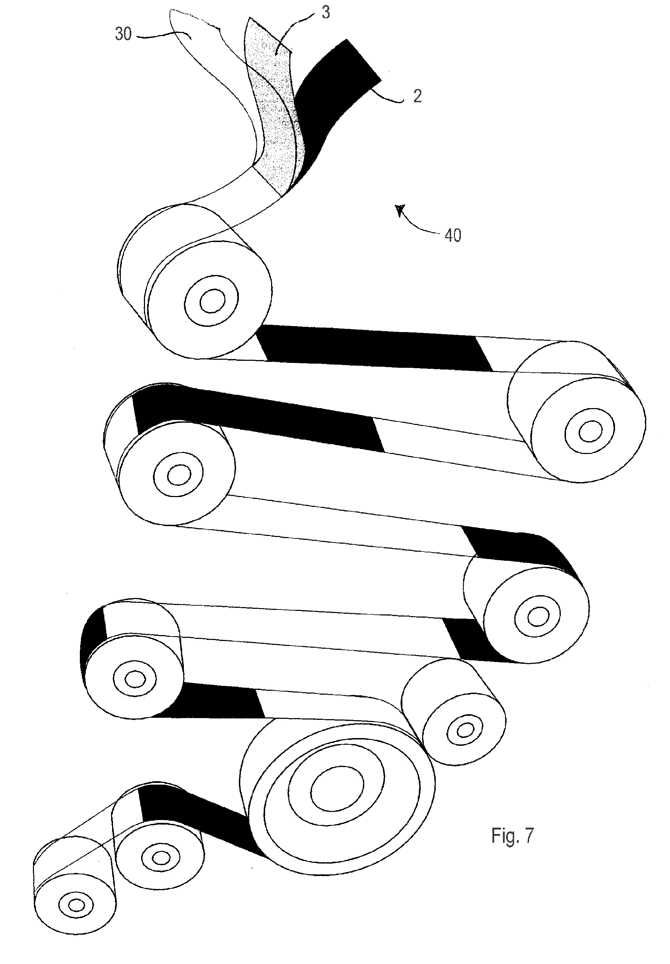

Fig. 7 is a schematic view of a tape of adhesive material to which a plurality of portions of the sheet material according to the invention is anchored, said portions being mutually spaced apart and each comprising a layer of foam material and a layer of graphic support;
Fig. 8 schematically shows the sheet material according to the invention, on which separation intended lines are provided in order to allow for the easy separation of single portions of sheet material which result to be precursors of handle devices according to the invention;
Fig. 9 is an enlarged detail of Fig. 8;
Fig. 10 is another version of the sheet material according to the invention.

With reference to the annexed drawings, a handle device 1 is described, which can be used for lifting and carrying product packages in general, such as, for example and in a non limitative way, packages of a plurality of bottles for containing mineral water or beverages in general. Particularly, the handle device is intended to be applied to, owing to the adhesive end zones thereof, the heat-shrinkable packaging material which contains and holds the bottles together. The handle device 1, however, can be generally used for bundles, thermoformed packages, over-the-counter products for consumers, as well as individual tinplate cans, etc..

The handle device 1 comprises a foamed material layer 2 provided with characteristics of softness which make the package comfortable and easy to lift and carry. The foamed material layer 2 can be made of neoprene, polystyrene, foamed polyethylene, open-cell or closed-cell materials, or other suitable materials having good impermeability properties, which provide the handle device 1 with softness.

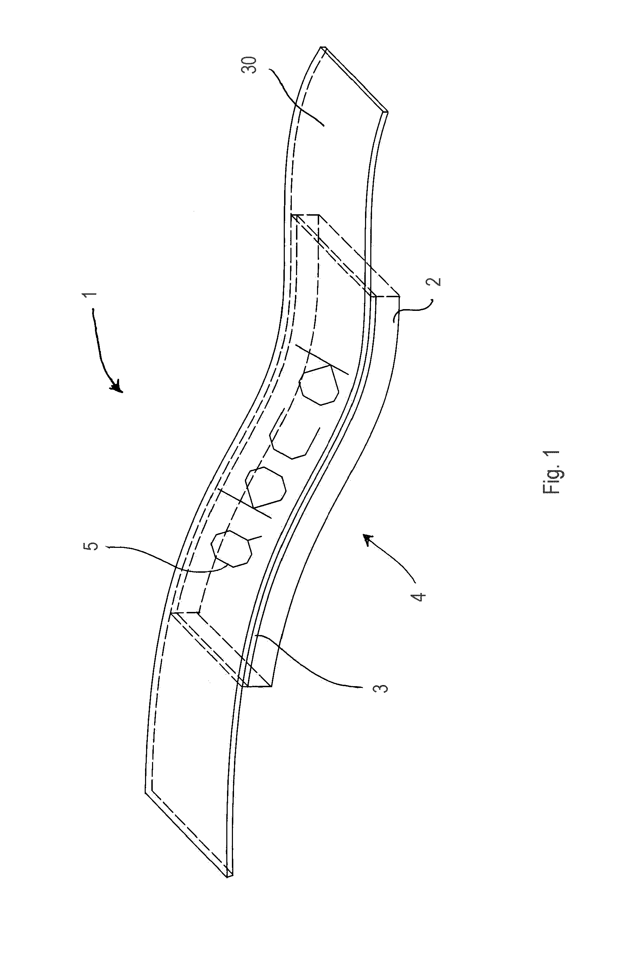

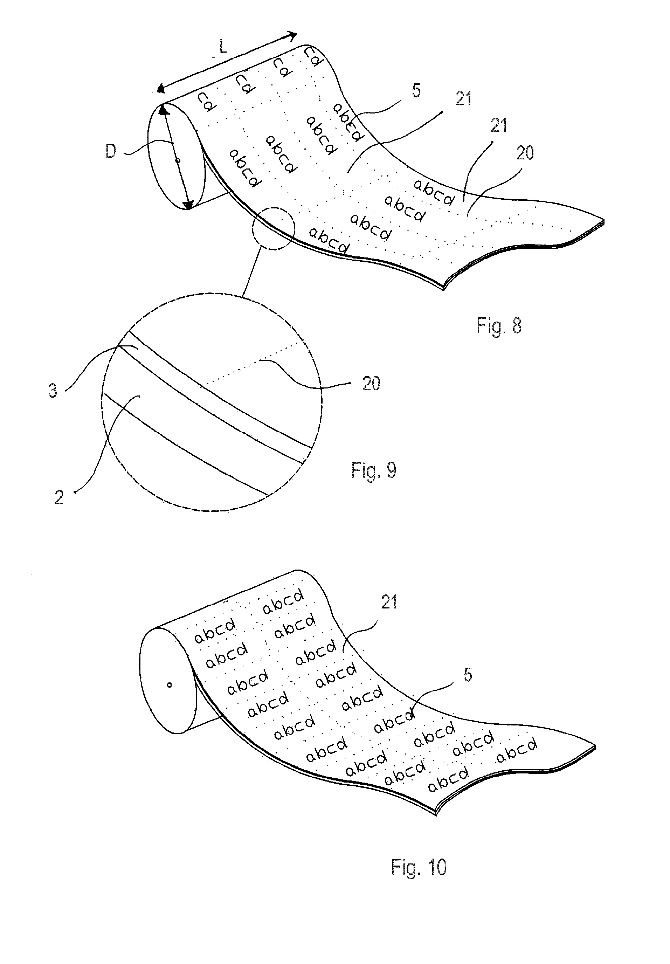

A graphic support layer 3 is overlapped to the foamed material layer 2, the former being well-visible in Fig. 1 and 9, on which graphic elements 5 are printed, such as data relevant to the packaged product and/or decorative patterns, or information on the manufacturer or the like. The graphic support layer 3 is stably joined to the foamed material layer 2, as will be described in greater detail later on. The graphic support layer 3 is made of a material having characteristics of high quality printability, i.e. suitable to support high-resolution printing. The graphic support layer 3 can comprise a polymer such as polyethylene, polyester, polythene, cellulose acetate, and/or other polymers, either transparent or in any colour, which can be also coupled, in turn, to aluminium or paper.

Owing to the graphic support layer 3, which is specifically intended for containing information, information such as the brand, the manufacturing company, the product name can be printed onto the handle device 1 with high resolution and graphic quality. Particularly, a high dimensional precision is guaranteed for the graphic elements 5, thereby allowing for barcodes, or other technical printing, to be carried out in a suitable manner and without any chance of reading mistakes. By providing the graphic support layer 30, the prior art drawback of having suitable graphic results is overcome, which was due to the poor attitude of the foamed material to be printed because of the characteristics of low-density and dimensional instability thereof.

The foamed material layer 2 and the graphic support layer 3, mutually joined, define one innovative sheet material 4. Particularly, the foamed material layer 2 and the graphic support layer 3 are mutually glued to each other such as to generate one homogeneous and inseparable material, i.e. the sheet material 4. Suitable portions of the sheet material 4 are then coupled to a tape of light-permeable adhesive material 30. The tape of adhesive material 30 can be of polyvinylchloride, or mono-oriented polypropylene provided on a face thereof with a natural-rubber-, or acrylic glue-, or hot-melt glue-based adhesive substance which allow the same to be applied to the product packaging.

The graphic support layer 3 is accordingly sandwiched between the foamed material layer 2 and the adhesive material layer 30.

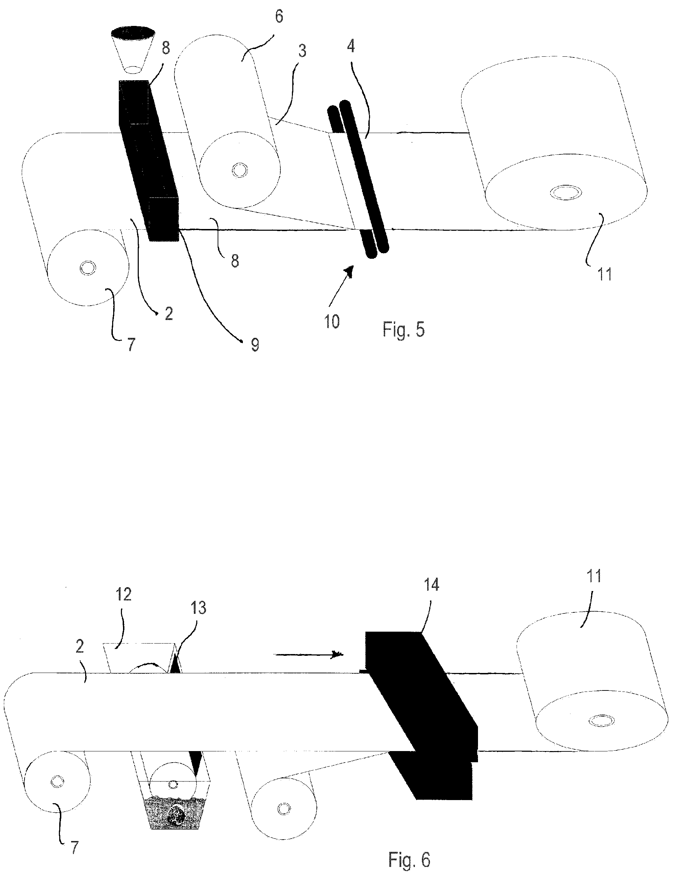

In order to obtain the sheet material 4, the foamed material layer 2 and the graphic support layer 3 are provided to be coupled by means of hot-melt coating and in-line dispersion blade. As schematically shown in Fig. 5, the previously printed graphic support layer 3 and the foamed material layer 2 are simultaneously and progressively unwound from first reel 6 and second reel 7, respectively, in a continuous manner, while a certain amount of adhesive substance or glue 8 (specific for plastics materials) is hot-melt spread on that face of the foamed material layer 2 which is intended to be coupled to the graphic support layer 3 by means of a spreading bar 9 in order to provide hot-melt coating. The graphic support layer 3 and the foamed material layer 2 are caused to adhere to each other by means of a calender 10. As the sheet material 4 is being obtained, it is wound to form a roll 11.

In an alternative version for obtaining sheet material 4, a cold-gluing method is provided. The foamed material layer 2 and the graphic support layer 3, previously printed, are mutually glued using glue that is applied to the surface of the foamed material layer 2 which is intended to be contacted with the graphic support layer 3. The glue contained within a tray 12 is applied by means of a cylinder 13 which is at least partially dipped in the tray 12. A doctor blade 13 suitably spreads the glue on the foamed material 2 and removes the excess amount. The foamed material layer 2 and the graphic support layer 3 in contact with each other are fed through an oven in order to dry the glue. As the sheet material 4 is obtained, it is wound to form a roll 11.

The mutual gluing of the foamed material layer 2 and graphic support layer 3 can be also carried out by means of suitable catalysts, ultrasound, radiations, heat sealing.

The graphic support layer 3 can be, prior to being subjected to the cold- or hot-gluing operation with the foamed material layer 2, subjected to a pretreatment intended to make it porous and effectively anchorable to the foamed material layer 2. Particularly, the graphic support layer 3 is subjected to a treatment called the "corona effect", or also "corona discharge effect". This treatment provides that an electric current is caused to flow between a high-potential electric conductor and a neutral surrounding fluid, such as the air; when the potential gradient overcomes a determined value which is sufficient to cause the ionization of the insulating fluid though insufficient to trigger an electric arc, the ionized fluid becomes plasma and conducts electricity which is caused to interact with the material composing the graphic support layer 3. With this treatment, the surface energy or tension of the graphic support layer is increased thereby increasing the wettability thereof. The graphic support layer 3 can be subjected to the "corona effect" treatment in order to also improve the adhesion of the print inks, i.e. before the graphic support layer 3 is printed.

In order to make the graphic support layer 3 porous to improve the couplability of the latter with the foamed material layer 2 and/or the wettability and the receptivity to the print ink, it is alternatively possible to carry out an ultrasound treatment or other suitable treatment.

The reel or roll 11 of sheet material 4 thus obtained has accordingly a plurality of graphic elements 5 to which positioning-cutting signs 20 (either visible or invisible to the human eye) are placed, which are suitable to be read by a suitable sensor, for example a photocell, in order to allow for the proper cutting of the sheet material 4. By means of said positioning-cutting signs 20 the sheet material 4 can be accurately cut to obtain precursor portions 21 that can be separated from the sheet material 4 in order to be coupled to respective portions of tape of adhesive material 30 thereby obtaining the handle devices 1.

As mentioned above, the sheet material 4 obtained is wound to form a roll or reel 11 which can be sized according to ISO standard parameters. By way of example, the reel 11 can have a width L of about 100 cm, a diameter D equal to about 800 mm and a thickness S of the sheet material 4 which can range between about 1 mm and about 3 mm.

By way of example, the sheet material 4 can have a total thickness of about 2 mm, defined for about 9/10 by the foamed material layer 2 and for the remaining 1/10 by the printed graphic support layer 3.

The reel 11 thus obtained can be either supplied to packaging companies in this configuration, or transformed into smaller reels, having a width size ranging from 15 to 25 cm, such that 4 to 6 reels can be obtained from the parent reel which are intended for industrial machines that process them in order to be coupled to the adhesive tape 30 such as to obtain the handle devices or handles 1.

Alternatively, the sheet material 4 can be cut to obtain the precursor portions 21 which are subsequently coupled in a manner distributed along the tape of adhesive material 30 such as to obtain a finished tape 40. Accordingly, the finished tape 40 comprises six single-layer areas (consisting in the adhesive tape 30) e three-layer areas (defined by adhesive tape 30, graphic support layer 3 and foamed material tape 2). The finished tape 40 can be subsequently re-wounded to obtain a ready-to-use roll for packaging companies, which does not require any further processing. Thereby, a packaging company is only required to cut the finished tape 40 in the single-layer area, such as to obtain handle devices 1 having, for example, a length ranging between 150 and 250 mm, provided with adhesive ends ready to be applied to packages for mineral water, cans, house-paper roll packages etc..

By means of the handle device 1, or the intermediate product represented by the sheet material 4 intended for obtaining said handle device 1, the drawbacks and inconveniences associated with prior art handles or grips are overcome. The handle device 1 according to the invention, besides being more comfortable for the user by avoiding injuries to the latter, due to the presence of the high-quality and high-resolution printed graphic support layer 3 it is also more appealing and effective in its function of giving more recognizability to the product with which it is associated.

The simultaneous provision of the characteristics of structural strength, high quality printing, and softness makes the handle device 1 innovative as compared with the prior art handles.

## Claims

1. A handle device (1) for a product packaging in general, comprising:
a foamed material layer (2),
a graphic support layer (3) printed with graphic elements (5) such as information data relating to said product and/or decorating patterns or the like, said graphic support layer (3) being joined to said foamed material layer (2);
a light-permeable adhesive material layer (30) intended to be applied to said package,
said graphic support layer (3) being interposed between said foamed material layer (2) and said adhesive material layer (30).

2. The handle device according to claim 1, wherein said graphic support layer (3) is provided in a polymeric material particularly suitable to be printed with a high graphic accuracy.

3. The handle device according to claim 2, wherein said polymeric material is selected from the group comprising: polyester, polypropylene, polythene, cellulose acetate.

4. The handle device according to one of claims 1 to 3, wherein said graphic support layer (3) is transparent or coloured and/or is coupled to a further layer of paper or aluminium.

5. The handle device according to one of claims 1 to 4, wherein said foamed material layer (2) is made from a material selected from a group comprising: foamed polystyrene ("foam"), neoprene, polystyrene, foamed polyethylene.

6. An intermediate product intended for obtaining a handle device (1) according to claim 1, comprising a foamed material layer (2) and a graphic support layer (3) printed with graphic elements (5) such as information data relevant to said product and/or decorative patterns, or the like, said graphic support layer (3) and said foamed material layer (2) being mutually joined to form one sheet material (4).

7. A method for obtaining a handle device (1) for a product package in general, comprising:
mutually joining a foamed material layer (2) and a graphic support layer (3) printed with graphic elements (5) such as information data relevant to said product and/or decorative patterns or the like, in order to obtain one sheet material (4),
coupling said sheet material (4) to an adhesive material layer (30) such that this graphic support layer (3) results interposed between said foamed material layer (2) and said adhesive material layer (30), said adhesive material layer (30) being light-permeable and intended to be applied to said package.

8. The method according to claim 7, wherein said graphic support layer (3) is subjected to a treatment to make the surface thereof porous such as to promote the joining of the latter to said foamed material layer (2), said treatment comprising: a so-called "corona effect" treatment, or a ultrasound treatment or other equivalent treatment.

9. The method according to claim 7 or 8, wherein said joining is carried out by an operation of hot melt coating, or cold glue application by means of a doctor-blade, or by means of heat sealing, and wherein there is provided wounding said sheet material (4) such as to obtain a corresponding roll (11) ready to be progressively used, in combination with a further roll of said adhesive material layer (30).

10. The method according to one of claims 7 to 9, wherein positioning-cutting signs (20) are provided on said sheet material (4), which are suitable to be read from a sensor in order to allow for the accurate cutting of a plurality of precursor portions (21) that can be separated from said sheet material (4) in order to be coupled to respective portions of said adhesive material layer (30) to obtain corresponding handle devices (1).
